# EUROPÄISCHE PATENTSCHRIFT

(11) **EP 3 636 063 B1**
(45) Veröffentlichungstag und Bekanntmachung des Hinweises auf die Patenterteilung: **30.08.2023**
(21) Anmeldenummer: 19187980.8
(22) Anmeldetag: 24.07.2019
(51) Int. Cl.: A01B 76/00, A01B 33/12, G01B 11/24, G01N 21/95, G01N 21/88, G06T 7/00, G06T 7/12

(54) **VERFAHREN UND VORRICHTUNG ZUR VERSCHLEISSERKENNUNG EINES BAUTEILS FÜR LANDWIRTSCHAFTLICHE GERÄTE**
METHOD AND DEVICE FOR DETECTING WEAR OF A COMPONENT FOR AGRICULTURAL EQUIPMENT
PROCÉDÉ ET DISPOSITIF DE DÉTECTION DE L'USURE D'UN COMPOSANT POUR APPAREILS AGRICOLES

(30) Priorität: 10.09.2018 DE 102018121997
(43) Veröffentlichungstag der Anmeldung: 15.04.2020
(73) Patentinhaber: PÖTTINGER Landtechnik GmbH, 4710 Grieskirchen (AT)
(72) Erfinder: Prechtl, Wolfgang, 4710 Grieskirchen (AT); Baier, Volker, 4710 Grieskirchen (AT); Sandberger, Markus, 4710 Grieskirchen (AT); Bumberger, Rainer, 4710 Grieskirchen (AT); Marböck, Simon, 4710 Grieskirchen (AT)
(74) Vertreter: Thoma, Michael

(56) Entgegenhaltungen:
- EP-A1- 0 727 656
- EP-A1- 3 326 749
- WO-A1-2012/127207
- US-A1- 2008 013 837
- US-A1- 2010 316 280
- US-A1- 2012 306 916
- US-A1- 2014 105 481
- US-A1- 2014 267 691
- US-A1- 2016 225 130
- US-A1- 2017 057 039
- US-A1- 2018 032 068
- US-A1- 2018 159 468

## Beschreibung

Die vorliegende Erfindung betrifft ein Verfahren und eine Vorrichtung zum Erkennen des Verschleißes eines Bauteils, insbesondere eines Verschleißteils einer landwirtschaftlichen Maschine, anhand einer visuellen Beurteilung des Bauteils.

An landwirtschaftlichen Maschinen, mit denen landwirtschaftliche Aufgaben, wie Grünlandbearbeitung oder Bodenbearbeitung, ausgeführt werden, kann Verschleiß zwar grundsätzlich an vielerlei verschiedenen Bauteilen auftreten, wobei sich der Verschleiß allerdings oft auf einige wenige Bauteile konzentriert, die bei der Grünland- oder Bodenbearbeitung besonders beansprucht werden. Oft sind dies die Bauteile, die im Eingriff mit dem zu bearbeitenden Boden oder dem zu bearbeitenden Erntegut stehen. Betrachtet man beispielsweise Erntemaschinen wie Mähmaschinen, Heuwerbungsmaschinen, Ladewagen oder Ballenpressen, tritt der Verschleiß häufig an den Schneideinrichtungen des Mähers, den Rechzinken der Rechkreisel oder den Schneidmessern des Aufnahmeförderers auf. Betrachtet man Bodenbearbeitungsmaschinen wie Grubber, Pflüge oder Eggen, tritt Verschleiß häufig an den Bodeneingriffszinken, den Pflugscharen oder den Scharscheiben auf.

Auch wenn der Verschleiß gehäuft und immer wiederkehrend an einigen wenigen Bauteilen auftritt, ist es doch schwierig, den Abnutzungsgrad und Verschleiß korrekt einzuschätzen, um zumindest einigermaßen verlässlich und präzise vorherzusagen, wann ein entsprechendes Bauteil ausgetauscht werden muss. Bislang erfolgt die Beurteilung des Verschleißzustandes üblicherweise in Form einer visuellen Beurteilung des Bauteils durch den Maschinenführer oder einen Servicemitarbeiter, wobei eine solche visuelle Nutzerbeurteilung von der Erfahrung des Nutzers und den zu Rate gezogenen Hilfsmitteln abhängt. Üblicherweise sind in der Betriebsanleitung für die Verschleißteile der Maschine Verschleißgrenzen visuell dargestellt, mit denen der aktuelle Zustand des Verschleißteiles abgeglichen werden kann. Allerdings ist es in der Praxis häufig so, dass solche Betriebsanleitungen mit Darstellungen der Verschleißgrenzen oft gar nicht zu Rate gezogen werden. Unabhängig hiervon kommt es insbesondere bei fehlender Erfahrung der die Beurteilung durchführenden Person zu ungenauen Abschätzungen. Wird der Verschleiß höher eingeschätzt als er ist, kommt es zu einem vorzeitigen Austauschen des Bauteils, so dass dessen tatsächliche Lebensdauer nicht ausgenutzt wird, während bei einem zu niedrigen Einschätzen des Verschleißes ein zu später Austausch des Bauteils zu weiteren Maschinenschäden führen kann.

Es wurden daher auch bereits automatisierte bzw. computergestützte Systeme vorgeschlagen, die das Eintreten der Austauschreife bzw. das Erreichen der Verschleißgrenze anhand verschiedener Kriterien vorhersagen. Beispielsweise zeigt die Schrift US 2016/0321606 A1 ein Ersatzteil-Lagerverwaltungssystem, das benötigte Ersatzteile anhand von Informationen aus dem Maschinenfuhrpark bereithält und aktualisiert. Hierbei wird aus der Historie des Verschleißeintritts an vergleichbaren Teilen eine Vorhersage getroffen, wann für ein bauähnliches Bauteil die Verschleißgrenze bzw. ein Versagen zu erwarten ist. Eine solche vergleichsweise herangezogene Verschleißhistorie bauähnlicher Baugruppen verliert jedoch schnell ihre Relevanz, wenn auch nur kleinere Bauteilabweichungen zu anderen Belastungsmustern führen oder die Einsatzbedingungen des jeweiligen Bauteils von denen, die in der Historie berücksichtigt sind, abweichen.

Ferner ist aus der US 2014/105481 A1 eine Vorrichtung zum Erkennen des Verschleißzustands eines Bauteils einer Ketten-Planierraupe bekannt, wobei mit einem mobilen Endgerät mit einer Kamera ein Istbild des Bauteils aufgenommen wird, welches von einer Auswerteeinheit mit einer Bildauswerteeinrichtung mit einer Referenzdarstellung des Bauteils, die in einem Referenzbildspeicher bereitgehalten wird, verglichen wird, um anhand des optischen Vergleichs den Schädigungs- und/oder Verschleißgrad des Bauteils zu bestimmen.

Den Verschleiß eines Kettenfahrzeugs will auch die US 2012/0306916 A1 bestimmen, wobei dort mittels einer Kamera ein Foto eines Teils des Kettenradantriebs gemacht werden soll, in dem dann die Abnutzung bzw. der Verschleiß über das Einprojizieren einer unverschlissenen Kante in das aufgenommene Bild sichtbar gemacht wird.

Die Schrift US 2018/0032068 A1 beschreibt einen heuristischen Ansatz bei Schadensakkumulationsmodellen, wobei ein mobiles Inspektionswerkzeug eine graphische Nutzerschnittstelle umfasst, wobei dem Nutzer Fragen gestellt werden und über die Nutzerschnittstelle Antworten des Nutzers eingegeben werden sollen.

Weiterhin zeigt die Schrift WO 2012/127207 A1 eine Vorrichtung zum Bestimmen von Korrosionsschäden an Offshore-Pipelines, wobei mittels einer Videokamera Ist-Bilder des Bauteils erfasst werden, die an eine Auswerteeinheit mit einer Bildauswerteeinrichtung übertragen werden, von der die übertragenen Bilder mit Referenzbildern aus einem Referenzbildspeicher verglichen werden, um das Korrosionsniveau zu bestimmen.

Weitere Systeme zur Verschleißerkennung von Bauteilen von Maschinen zeigen die Schriften US 2014/267691 A1, US 2016/225130 A1, EP 33 26 749 A1, US 2010/316280 A1, US 2008/013837 A1, EP 0 727 656 A1, US 2018/159468 A1 und US 2017/057039 A1.

Der vorliegenden Erfindung liegt daher die Aufgabe zugrunde, eine verbesserte Vorrichtung und ein verbessertes Verfahren zum Bestimmen des Verschleißes eines Bauteils zu schaffen, die Nachteile des Standes der Technik vermeiden und letzteren in vorteilhafter Weise weiterbilden. Insbesondere soll eine präzise, verlässliche Bestimmung des Verschleißes erreicht werden, die auch für unerfahrenere Maschinennutzer in einfacher Weise handzuhaben ist.

Erfindungsgemäß wird die genannte Aufgabe durch eine Vorrichtung nach Anspruch 1 sowie ein Verfahren nach Anspruch 16 gelöst. Bevorzugte Ausgestaltungen der Erfindung sind Gegenstand der abhängigen Ansprüche.

Es wird also vorgeschlagen, den Verschleißzustand des Bauteils mit Hilfe einer visuellen Beurteilung des Bauteils zu bestimmen, die computergestützt ausgeführt wird und ein aufgenommenes Ist-Bild des Bauteils mit einem gespeicherten Referenzbild rechnergestützt vergleicht, um anhand des Bildvergleichs den Verschleißzustand zu bestimmen. Erfindungsgemäß wird von einem mobilen Endgerät mit einer optischen Erfassungseinrichtung, insbesondere einer Kamera, ein Ist-Bild des Bauteils erfasst und von einer Datenkommunikationseinrichtung an eine Auswerteeinheit übertragen, die das Ist-Bild des Bauteils mit zumindest einem Referenzbild des Bauteils, das in einem Referenzbild-Speicher bereitgehalten wird, vergleicht und anhand des Bildvergleichs den Verschleißzustand des Bauteils bestimmt. Ein solcher rechnerbasierter Abgleich des erfassten Ist-Bilds mit einem gespeicherten Referenzbild ist in der Regel deutlich genauer als eine visuelle Beurteilung durch den individuellen Maschinennutzer und stellt zudem sicher, dass das vorhandene Referenzbild des Bauteils auch tatsächlich verwendet wird. Gleichzeitig spielt die Erfahrung des Nutzers keine Rolle mehr.

Das mobile Endgerät kann insbesondere ein Mobiltelefon, beispielsweise in Form eines Smartphones, sein, welches eine Kamera zum Erfassen des Ist-Bilds des Bauteils aufweist, wobei aber auch ein Tablet-Computer oder eine datenübertragungsfähige Kamera verwendet werden kann, um das Ist-Bild des jeweiligen Bauteils zu erfassen und an die Auswerteeinrichtung zu übertragen. Anstelle oder zusätzlich zu einer Kamera kann das mobile Endgerät auch eine bildgebende Sensorik, beispielsweise mit Lasersensoren, CMOS-Sensoren oder Ultraschallsensoren aufweisen.

Die genannte Auswerteeinheit kann ein separater, insbesondere auch stationärer Rechner oder Server sein, auf dem Bildauswertemittel, beispielsweise in Form von Software, bereitgehalten werden, um den Bildvergleich zwischen dem Ist-Bild und dem zumindest einen gespeicherten Referenzbild auszuführen und anhand des Vergleichs den Verschleißzustand zu bestimmen. Die Übertragung der Bilddaten des erfassten Ist-Bilds an einen solchen Server oder stationären Rechner nimmt auf die üblicherweise begrenzte Rechenkapazität von mobilen Endgeräten Rücksicht und erlaubt es, auch komplexere Bildauswerte-Algorithmen auszuführen und/oder künstliche Intelligenz anzuwenden, ohne hierfür längere Bearbeitungszeiten zu benötigen.

Grundsätzlich wäre es aber auch möglich, im mobilen Endgerät einen Auswertebaustein, beispielsweise in Form einer Software-App, zu implementieren, um das erfasste Ist-Bild zumindest teilweise auszuwerten und/oder mit dem genannten Referenzbild zu vergleichen. Beispielsweise kann ein solcher im mobilen Endgerät implementierter Auswertebaustein das Ist-Bild des Bauteils vorauswerten, beispielsweise dahingehend, um welches Bauteil es sich handelt. Ein solcher Bauteil-Identifikationsbaustein kann die genannten Bilddaten des erfassten Ist-Bilds auswerten und das Bauteil beispielsweise anhand seiner Form und/oder seiner Farbe und/oder seiner Größe und/oder seiner Ausrichtung im Raum identifizieren und/oder einer Gruppe von möglichen Bauteilen zuordnen.

Die Identifikation des Bauteils, von dem das Ist-Bild erfasst wurde, kann jedoch auch andere Informationen verwerten. Beispielsweise kann der genannten Identifikationsbauteil am mobilen Endgerät eingegebene Bauteildaten zur Identifikation verwenden, wobei solche Bauteilinformationen beispielsweise eine Geräteidentifikationsnummer oder -kennzeichnung und/oder eine Bauteilkennziffer oder Bauteilkennung oder beides umfassen kann. Das mobile Endgerät kann zur Eingabe dieser Bauteilinformationen beispielsweise ein Touchscreen und/oder eine Tastatur, aber auch andere Eingabemittel, wie beispielsweise einen Spracherkennungsbaustein umfassen. Alternativ oder zusätzlich kann der Identifikationsbaustein auch Code-Erfassungsmittel aufweisen, mittels derer ein am Bauteil angebrachter Code, beispielsweise in Form eines Strichcodes der eines HR-Codes eingelesen werden kann, um anhand des eingelesenen Codes das Bauteil zu identifizieren.

Vorteilhafterweise kann das mobile Endgerät den Endgerätenutzer bei Eingabe der Bauteilinformationen mittels einer Bildschirmanzeige oder einer Sprachsteuerung oder anderer Benutzerführungsmittel führen. Beispielsweise kann das mobile Endgerät bei Aufrufen des Verschleißerfassungsmoduls eine Abfrage auf dem Bildschirm oder über eine akustische Ausgabe bereitstellen, die nach dem Bauteil frägt, dessen Verschleiß zu identifizieren ist, beispielsweise in der Form "welches Bauteil?", was dann durch den Endgerätenutzer durch die Eingabe "Schneidmesser am Ladewagen" beantwortet werden kann.

Alternativ oder zusätzlich kann die Identifikation des Bauteils, dessen Verschleiß bestimmt werden soll, aber auch an dem genannten separaten Rechner oder Server erfolgen bzw. kann der genannte Identifikationsbaustein auch an dem separaten Rechner oder Server implementiert sein, wobei der Identifikationsbaustein auch hier anhand der Bilddaten, die die Identifikation bewerkstelligen oder gegebenenfalls alternativ oder zusätzlich am Endgerät eingegebene Bauteilinformationen verarbeiten kann, welche dann an den Rechner oder Server übertragen werden.

Um die Bildauswertung zu vereinfachen und eine komplexe Kompensation unterschiedlicher Aufnahmewinkel zwischen Ist-Bild und Referenzbild zu vermeiden, kann vorteilhafterweise eine Aufnahmeführung am mobilen Endgerät bereitgestellt werden, die dem Endgerätenutzer angibt, aus welcher Perspektive und/oder in welchem Aufnahmewinkel und/oder in welchem Abstand das Ist-Bild des jeweiligen Bauteils zu machen ist und/oder die optische Erfassungseinrichtung des mobilen Endgeräts relativ zum Bauteil zu positionieren und auszurichten ist.

Eine solche Aufnahmeführung kann in Abhängigkeit des zu erfassenden Bauteils arbeiten, um bauteilspezifische Charakteristika zu berücksichtigen, welche für die Verschleißerfassung relevant sind. Beispielsweise kann ein solcher Aufnahmeführungs-Baustein mit dem zuvor genannten Identifikationsbaustein kommunizieren, um anhand der Identifikation des Bauteils dann bauteilspezifische Anweisungen für die Erfassung des Ist-Bilds bereitzustellen.

Beispielsweise kann es für die Verschleißbestimmung eines Schneidmessers sinnvoll sein, eine horizontale Seitenansicht als Ist-Bild und/oder eine frontale Draufsicht auf die Schneide als Ist-Bild zu erfassen, insbesondere vor dem Hintergrund, dass Schneidmesser eines Ladewagens oder eine Ballenpresse üblicherweise in bestimmter Ausrichtung am Schneidbalken montiert sind. Soll andererseits der Verschleiß einer Scharscheibe erfasst werden, die üblicherweise spitzwinklig zur Horizontalen und spitzwinklig zur Vertikalen verkippt ist, kann es sinnvoll sein, eine Anleitung bereitzustellen, die inhaltlich besagt, die Scheibe in einer Blickrichtung koaxial zur Drehachse der Scheibe bei der Aufnahme herzustellen.

Ein solcher Aufnahmeführungs-Baustein kann, zumindest teilweise, im mobilen Endgerät implementiert sein, wobei ein solcher Aufnahmeführungs-Baustein auch Daten berücksichtigen kann, die von einem separaten Rechner oder Server an das mobile Endgerät übertragen werden.

Der Aufnahmeführungs-Baustein kann die Anweisung für die Erfassung des Ist-Bilds grundsätzlich in verschiedener Weise bereitstellen, beispielsweise durch Anzeigen des Referenzbilds des Bauteils auf einem Display bzw. einer Anzeigevorrichtung des mobilen Endgeräts. Alternativ oder zusätzlich können die Anweisungen der Aufnahmeführung auch akustisch und/oder in Textform vom mobilen Endgerät ausgegeben werden.

Der genannte Aufnahmeführungsbaustein kann auch Erinnerungen bereitstellen, beispielsweise in zyklischen Abständen und/oder in Abhängigkeit der Betriebsstunden des jeweiligen Geräts, wobei als Erinnerung beispielsweise eine Aufforderung zum Aufnehmen eines Bilds eines bestimmten Bauteils der Maschine an dem mobilen Endgerät oder einer anderen Anzeigevorrichtung bereitgestellt werden kann. Alternativ oder zusätzlich kann der Aufnahmeführungsbaustein in Abhängigkeit eines identifizierten Maschinentyps eine Anweisung bereitstellen, welches Bauteil bildtechnisch zu erfassen ist. Wird beispielsweise ein Ladewagen erfasst, beispielsweise durch Einscannen eines QR-Codes oder durch Eingeben am Touchscreen des mobilen Endgeräts, kann die Aufnahmeführung die Anweisung ausgeben, die Schneidmesser bildtechnisch zu erfassen.

Die genannte Bildauswerteeinrichtung kann zur Erfassung der Schädigungsmuster grundsätzlich verschieden ausgebildet sein. Um beispielsweise einen Materialabtrag oder Verbiegungen des Bauteils durch den Boden- oder Ernteguteingriff und damit einhergehende Verdickungen und Verdünnungen in der Bauteilkontur zu erfassen, kann die Bildauswerteeinrichtung Konturauswertemittel umfassen, die anhand eines Bildvergleichs Bauteilverdickungen und/oder Verdünnungen in Bereichen, in denen ein Bauteilmantel oder -abschnitt verschlissen ist und/oder fehlt, und/oder andere Konturveränderungen wie Wellungen, die gegenüber dem Sollzustand der Bauteilkontur auftreten, bestimmen können.

Hierbei muss nicht zwangsweise ein Bildvergleich zu einem Referenzbild erfolgen, sondern es kann auch aus einem bestimmten Konturverlauf per se, beispielsweise besonderen Unregelmäßigkeiten wie Ausbeulungen oder Einbuchtungen oder Wellungen auf eine Schädigung geschlossen werden, die eine Ablegereife signalisiert. Dies beruht auf dem Gedanken, dass ein ungeschädigtes Bauteil - je nach Bauteil - oft einen gleichmäßigen Konturverlauf besitzt und insofern Unregelmäßigkeiten wie Wellungen als Indiz für eine Schädigung des Bauteils angesehen werden können, insbesondere wenn zuvor das Bauteil als ein Bauteil identifiziert wurde, welches einen harmonischen Konturverlauf, insbesondere eine harmonische Außenkontur besitzt.

Alternativ oder zusätzlich kann die Bildauswerteeinrichtung Farbmuster- und/oder Graustufen-Auswertemittel umfassen, die anhand eines Bildvergleichs Veränderungen des Farbmusters und/oder Graustufenmusters, das das Bauteil im aufgenommenen Bild zeigt, bestimmen kann. Insbesondere kann ein solches Farbmuster die Abfolge vorbestimmter Farben und/oder ein Anordnungsmuster vorbestimmter Farben bzw. entsprechender Graustufen meinen, beispielsweise dahingehend, dass entlang des Seiles wechselweise rote, weiße und grüne (oder hellgraue, dunkelgraue und schwarze) Streifen oder ein Schachbrettmuster vorliegen, wenn das Bauteil unverletzt ist. Verändert sich diese Soll-Farbfolge beispielsweise durch Verschwinden der weißen Streifen in ein rot-grünes Streifenmuster, können die genannten Farbmuster-Auswertemittel anhand einer solchen Abweichung eine Schädigung bestimmen. Dabei kann auch ein entsprechendes Graustufenmuster im Sinne eines Farbmusters angesehen werden, beispielsweise dahingehend, dass ein hellgrau-/dunkelgraues Schachbrettmuster vorgesehen ist oder entlang des Seiles abwechselnd schwarze, anthrazitfarbene und hellgraue Streifen angeordnet sind und von der Bildauswerteeinrichtung erfasst und ausgewertet werden. Verschwinden beispielsweise die anthrazitfarbenen Streifen, so dass das Graustufenmuster zu einem Schwarzweißmuster wird, kann dies die genannte Farbmuster-Auswerteeinrichtung erkennen und als Bauteilschädigung interpretieren. Schwarz, weiß und Zwischenstufen wie grau können also auch als Farben angesehen werden.

Alternativ oder zusätzlich kann die genannte Bildauswerteeinrichtung auch Farbflächenanteil-Auswertemittel umfassen, die in einem erfassten Bild des Bauteils den Flächenanteil einer jeweiligen Farbe bestimmen können, den die Farbe in der Gesamtfläche des Bauteils einnimmt. Ist beispielsweise ein Erntegutleitblech wie bei dem zuvor beschriebenen Beispiel ursprünglich rot-weiß-grün gestreift, wobei die Streifenbreiten gleich groß sind, so dass jede Farbe ein Drittel der Gesamtfläche einnimmt, können die genannten Farbflächenanteil-Auswertemittel ein Verschleißen der weißen Partien und eine damit einhergehende Schädigung des Bauteils bestimmen, wenn der Flächenanteil der genannten weißen Abschnitte vom Sollwert 33 % auf beispielsweise weniger als 25 % oder weniger als 15 % abnimmt.

Die genannten Farbflächenanteil-Auswertemittel können ggf. auch das Auftreten einer neuen Farbe und deren Flächenanteil bestimmen. Tritt beispielsweise der andersfarbige Stahlkern eines kunststoffbeschichteten Bauteils durch Verschleißen der Kunststoffbeschichtung zutage, können beispielsweise silbrig-metallische Flecken in dem vorgenannten rot-weiß-grünen Farbmuster auftreten, so dass die Farbflächenanteil-Auswertemittel eine Schädigung bestimmen können, wenn der Flächenanteil der silbrigen Flecken ein vorbestimmtes Maß überschreitet.

Alternativ oder zusätzlich kann die Bildauswerteeinrichtung Oberflächenstrukturmuster-Auswertemittel umfassen, die anhand eines Bildvergleichs Veränderungen des Oberflächenstrukturmusters, das das Bauteil im aufgenommenen Bild zeigt, bestimmen kann. Insbesondere kann ein solches Oberflächenstrukturmuster die Abfolge vorbestimmter Strukturierungen und/oder ein Anordnungsmuster vorbestimmter Strukturelemente meinen, beispielsweise dahingehend, dass entlang eines Riemens in einer Ballenformkammer wechselweise grobfaserige, linear verlaufende Faserstränge und feinfaserige verdrehte Faserstränge vorliegen, wenn der Riemen unverletzt ist. Verändert sich diese Soll-Oberflächenstrukturfolge beispielsweise durch Verschwinden der feinfaserigen Stränge, können die genannten Oberflächenstrukturmuster-Auswertemittel anhand einer solchen Abweichung eine Riemenschädigung bestimmen.

Die vorgenannte Bildauswerteeinrichtung kann in vorteilhafter Weiterbildung der Erfindung auch Dehnungs- und/oder Verformungsauswertemittel umfassen, die eine Dehnung oder Verformung des Bauteils anhand eines Vergleichs des aktuellen Ist-Bilds mit einem gespeicherten Referenzbild bestimmen können. Insbesondere können die genannten Dehnungsauswertemittel die Beabstandung vorbestimmter Farbmuster- und/oder Pixelmusterstellen voneinander identifizieren und bestimmen und mit einem Sollwert, der aus dem Bild des Bauteils im Ursprungszustand oder Sollzustand bestimmt werden kann, vergleichen, um eine Dehnung oder Verformung in Längsrichtung und/oder Querrichtung des Bauteils bestimmen zu können.

Um eine präzisere Erfassung des Schädigungs- bzw. Verschleißverlaufs zu erzielen und/oder eine bessere Vorhersage der verbleibenden Lebenszeit zu ermöglichen, kann die Auswerteeinrichtung dazu ausgebildet sein, anhand zeitlich versetzter Verschleißmessungen eine Verschleißkurve zu bestimmen, anhand deren Verlaufs die Lebenserwartung des Verschleißteils vorausgesagt werden kann. Die Voraussage anhand der bestimmten Verschleißkurve kann beispielsweise durch Extrapolation des bislang bestimmten Kurvenverlaufs vorgenommen werden. Vorteilhafterweise kann die zuvor genannte Aufnahmeführung in vorbestimmten zeitlichen Intervallen und/oder nach Verstreichen vorbestimmter Betriebsstunden zum Aufnehmen eines Bilds des jeweiligen Bauteils auffordern, welches Bild dann in der beschriebenen Weise ausgewertet wird, um den aktuellen Verschleißzustand zu bestimmen. Anhand der zeitlich beabstandeten bzw. nacheinander erfolgenden Bestimmungen des Verschleißzustands wird die genannte Verschleißkurve bestimmt.

Vorteilhafterweise berücksichtigt die Auswerteeinrichtung zusätzlich zur Bildauswertung auch noch andere Kriterien, um den Verschleißzustand zu bestimmen. Dabei werden von einer Datenverarbeitungsvorrichtung der Maschine, an dem das Bauteil verwendet wird, Betriebsdaten, insbesondere erbrachte Flächenleistung, Betriebsstunden, Fuhrenanzahl, Ballenanzahl, an das mobile Endgerät übertragen, wobei die Auswerteeinheit Auswertemittel zum Auswerten der von dem mobilen Endgerät an die Auswerteeinheit übertragenen Betriebsdaten umfasst, wobei die genannten Auswertemittel eine Schätzeinrichtung zum Abschätzen des Verschleißzustands des Bauteils anhand der übermittelten Betriebsdaten umfasst.

Dabei ist die Auswerteeinheit dazu ausgebildet, anhand des auf Basis der übermittelten Betriebsdaten geschätzten Verschleißzustands und des von der Bildauswerteeinrichtung anhand des Bildvergleichs ermittelten Verschleißzustands einen endgültigen Verschleißzustand zu bestimmen.

Das Ergebnis der rechnerbasierten Verschleißbestimmung kann in vorteilhafter Weise an dem mobilen Endgerät angezeigt werden, wobei die Anzeige grundsätzlich in verschiedener Weise erfolgen kann. Beispielsweise kann eine optische Anzeige in Form einer Verschleißmeldung "Verschleißzustand 82 %" erfolgen, wobei alternativ oder zusätzlich zu einer Textdarstellung bzw. -anzeige auch eine grafische Darstellung, beispielsweise eines Balkendiagramms oder eines mehr oder weniger gefüllten Lebenszeit-Glases erfolgen kann.

Alternativ oder zusätzlich kann auch eine akustische Ausgabe des bestimmten Verschleißzustandes erfolgen.

Vorteilhafterweise kann eine Verschleißanzeige am mobilen Endgerät auch eine kombinierte Darstellung des erfassten Ist-Bildes und des gespeicherten, zumindest einen Referenzbildes erfolgen, wobei insbesondere das erfasste Ist-Bild neben und/oder über einem gespeicherten Referenzbild angezeigt werden kann, das den unverschlissenen Neuzustand des Bauteils und/oder das Bauteil bei Erreichen der Verschleißgrenze zeigt. Das genannte Ist-Bild und das genannte Referenzbild können hierbei unmittelbar nebeneinander und/oder unmittelbar übereinander angezeigt werden. Vorteilhafterweise können die beiden Bilder, d.h. das erfasste Ist-Bild und das genannte Referenzbild, überlagert werden, so dass der Endgerätenutzer die Bauteilkontur gemäß Ist-Bild überlagert mit der Bauteilkontur des Referenzbildes - also insbesondere mit der Bauteilkontur im Neuzustand und/oder der Bauteilkontur im Verschleißgrenzen-Zustand - zeigt. Durch eine solche überlagerte Darstellung kann der Endgerätenutzer unmittelbar den Grad des erreichten Verschlei-ßes sehen.

Zusätzlich zur erläuterten Bildauswertung bzw. dem erläuterten Bildvergleich zwischen erfasstem Ist-Bild und gespeichertem Referenzbild kann der Verschleißbestimmungs-Baustein auch noch weitere Bauteil- und/oder Maschinenbetriebsdaten berücksichtigen und/oder auswerten. Beispielsweise können relevante Betriebsdaten wie Flächenleistung, Betriebsstunden, Ballenzahl oder Fuhrenzahl für die Verschleißbestimmung Berücksichtigung finden, wobei der Verschleißbestimmungs-Baustein die genannten Daten auch unterschiedlich gewichten und mit unterschiedlicher Gewichtung berücksichtigen kann.

Vorteilhafterweise kann der mittels der Bildauswertung bestimmte Verschleißzustand und der mit Hilfe der weiteren Maschinenbetriebsdaten ermittelte, vermutliche Verschleißzustand kombinatorisch verwendet werden, um den tatsächlichen Verschleißzustand zu ermitteln, wobei auch hier der aus der Bildauswertung bestimmte Verschleißzustand gewichtet und mit dem gewichteten Maschinenbetriebsparametern kombiniert werden kann.

Beispielsweise kann bei Bestimmung eines Verschleißgrads von 80 % aus der Bildauswertung und einem Verschleißgrad von 100% aus den weiteren Maschinenbetriebsdaten ein tatsächlicher Verschleißzustand von 90 % bestimmt werden, wenn Bildauswertung und alle weiteren Betriebsdaten zusammen gleich gewichtet werden. Werden die berücksichtigten Maschinenbetriebsdaten geringer gewichtet als der Bildvergleich, kann aus den genannten, individuellen Verschleißgraden von 80 % und 100 % beispielsweise ein Verschleißgrad von 85 % bestimmt werden.

Vorteilhafterweise kann das mobile Endgerät einen Betriebsdatenerfasser aufweisen, um am landwirtschaftlichen Gerät und/oder dem jeweiligen Bauteil gespeicherte Betriebsdaten zu erfassen bzw. einzulesen. Ist beispielsweise am landwirtschaftlichen Gerät oder auch am Bauteil selbst ein Transponder oder eine andere Datenspeichereinrichtung vorgesehen, welche die vorgenannten Betriebsdaten, wie beispielsweise Flächenleistung, Ballenzahl, Fuhrenzahl oder Betriebsstunden speichert, vorgesehen, kann am mobilen Endgerät ein RFID-Leser vorgesehen sein. Vorteilhafterweise kann auch eine Bluetooth-Einrichtung am mobilen Endgerät genutzt werden, um die genannten Daten vom zu prüfenden Bauteil bzw. der landwirtschaftlichen Maschine zu erfassen, wenn dort die entsprechenden Daten in einem Bluetooth-fähigen Elektronikbaustein gespeichert sind.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Gesamtansicht einer Vorrichtung zum Erfassen des Verschleißzustandes der Verschleißteile an einem landwirtschaftlichen Gerät in Form eines Ladewagens,
- Fig. 2:: eine perspektivische Darstellung des Schneidmesserbalkens des Ladewagens aus Fig. 1 bei der photographischen Verschleißerfassung der Messer, und
- Fig. 3:: das mit Hilfe der Kamera des mobilen Endgeräts erfasste Ist-Bild eines Schneidmessers des Ladewagens aus Fig. 1 und mehrere Referenzschadensbilder des Schneidmessers, die verschiedene Verschleißzustände zeigen.

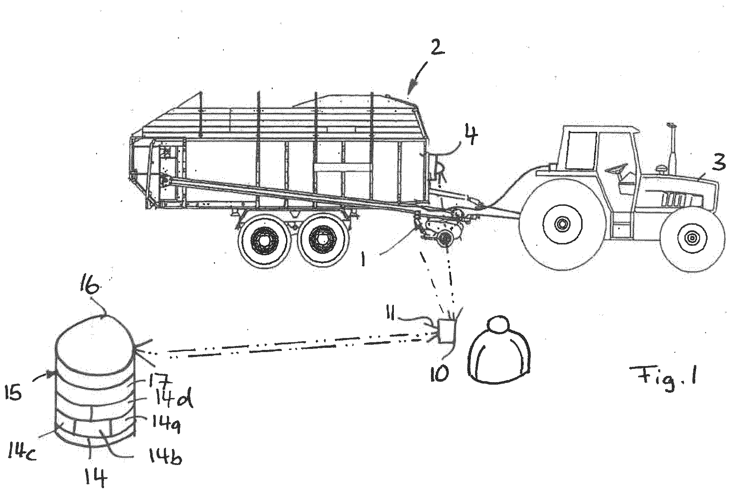

Wie die Figuren 1 bis 3 zeigen, kann beispielsweise der Verschleißzustand von Verschleißteilen eines landwirtschaftlichen Geräts in Form eines Ladewagens bestimmt werden, wobei das Bauteil 1, dessen Verschleiß bestimmt werden soll, beispielsweise die Messer des Ladewagens sein können, mit denen das vom Boden aufgenommene Erntegut zerschnitten wird, bevor es in den Laderaum des Ladewagens gefördert wird.

Wie Fig. 1 zeigt, kann die landwirtschaftliche Maschine 2 beispielsweise in Form des Ladewagens als Anbaugerät ausgebildet sein, das von einem Schlepper gezogen oder geschoben wird und gesteuert werden kann, wobei die landwirtschaftliche Maschine 2 oder auch der zugehörige Schlepper 3 eine Datenverarbeitungsvorrichtung 4, beispielsweise in Form eines Jobrechners, aufweisen kann, um Betriebsdaten der Maschine 2 zu sammeln. Beispielsweise kann die Datenverarbeitungsvorrichtung 4 über eine geeignete Sensorik Betriebsdaten, wie beispielsweise die Flächenleistung, die Anzahl der Fuhren oder die Menge des aufgenommenen Ernteguts erfasst und gespeichert werden, wobei diese gespeicherten Maschinenbetriebsdaten über einen Kommunikationsbaustein der Datenverarbeitungsvorrichtung 4 auf ein mobiles Endgerät 10 des Endnutzers übertragen werden kann.

Beispielsweise kann an der landwirtschaftlichen Maschine 2 ein so genannter Beacon, also ein Funksender, oder auch eine andere Sendeeinrichtung vorgesehen sein, um die Maschinenbetriebsdaten auf das mobile Endgerät 10 zu übertragen. Beispielsweise kann auch ein Transponder oder insbesondere auch eine Bluetooth-Einrichtung vorgesehen werden, die mit dem mobilen Endgerät 10 kommunizieren kann.

Das mobile Endgerät 10 kann insbesondere als Mobiltelefon, vorzugsweise in Form eines Smartphones, aber auch als Tablet-Computer ausgebildet sein.

Das mobile Endgerät 10 weist insbesondere eine Datenkommunikationseinrichtung 11 sowie eine optische Erfassungseinrichtung 12, vorzugsweise in Form einer Kamera 13 auf, um einerseits Daten, einschließlich Bilddaten, übertragen zu können, wobei die Datenkommunikationseinrichtung 11 beispielsweise eine Mobilfunkeinrichtung 12 umfassen kann. Die Datenkommunikationseinrichtung 11 umfasst vorteilhafterweise auch die vorgenannte Bluetooth-Einrichtung oder eine Einrichtung, um die Funksignale des Beacons der Maschine 2 empfangen zu können, wobei hierfür eine Nahfeld-Kommunikationseinrichtung ausreichend sein kann.

Wie Fig. 1 verdeutlicht, kann das mobile Endgerät 10 insbesondere mit einer separaten Rechnereinheit, beispielsweise in Form eines Servers, und/oder einer Datencloud kommunizieren, wie noch erläutert wird.

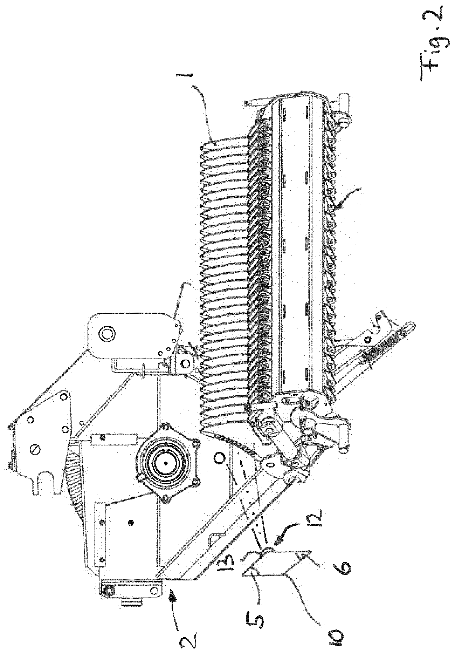

Um den Verschleißzustand eines Bauteils 1, beispielsweise der Schneidmesser, der landwirtschaftlichen Maschine 2 zu bestimmen, nimmt der Endnutzer mit der Kamera 13 des mobilen Endgeräts 10 zunächst zumindest ein Foto des Bauteils 1 auf, das eine Ist-Darstellung bzw. ein Ist-Bild des Bauteils 1 darstellt. Wie Fig. 2 zeigt, kann beispielsweise der die Messer tragende Messerbalken herausschwenkbar sein, um Zugang zu den Messern zu haben, was an sich dem Austausch oder dem Schleifen der Messer dient, gleichzeitig aber den Blick auf die Messer freigibt, um ein Bild aufzunehmen.

Um das Ist-Bild des Bauteils 1 aus der richtigen Perspektive und/oder aus der richtigen Entfernung aufzunehmen, kann das mobile Endgerät 10 vorteilhafterweise eine Aufnahmeführungs-Einrichtung 5 umfassen, die Teil einer auf dem Endgerät 10 implementierbaren App, bzw. eines entsprechenden Software-Bausteins sein kann, der Anweisungen zur Perspektive und/oder zum Abstand für die Aufnahme des Ist-Bilds ausgeben kann. Solche Aufnahmeanweisungen können mit der Identifikation des zu bearbeitenden Bauteils 1 verknüpft sein, um bauteilspezifische, individuelle Aufnahmeanweisungen ausgeben zu können.

Hierfür kann es sinnvoll sein wenn vor der Aufnahme des Ist-Bilds das Bauteil 1 identifiziert wird, was beispielsweise über eine manuelle Eingabe über die Dateneingabevorrichtung des mobilen Endgeräts 1 erfolgen kann, beispielsweise über dessen Touchscreen und/oder dessen Tastatur. Hierfür kann die genannten Aufnahmeführung 5 zunächst eine Eingabeaufforderung anzeigen, beispielsweise "welches Bauteil", woraufhin der Endnutzer die Eingabe "Schneidmesser" eingeben kann, gegebenenfalls auch über einen Spracheingabebefehl. Alternativ oder zusätzlich kann der Identifikationsbaustein 6 zum Identifizieren des Bauteils 1 auch einen Codeleser umfassen, mittels dessen ein am Bauteil angebrachter Code, beispielsweise in Form eines Strichcodes oder eines VR-Codes, eingelesen werden kann.

Ist das Bauteil 1 identifiziert - im vorliegenden Fall also das Schneidmesser - kann die Aufnahmeführungs-Einrichtung 5 entsprechende Anweisungen für die Aufnahme des Ist-Bilds bereitstellen, was beispielsweise grafisch auf dem Display des Endgeräts 10 oder akustisch über dessen Lautsprecher erfolgen kann.

Die genannten Aufnahmeführungs-Anweisungen können dabei auf dem mobilen Endgerät 10 selbst gespeichert sei. Alternativ oder zusätzlich kann das mobile Endgerät 10 hierfür auch mit dem genannten separaten Rechner 16 kommunizieren, um dort aus einer Datenbank die Aufnahmeführungs-Anweisungen abzurufen, die für das entsprechende Bauteil dort hinterlegt sein können.

Die genannten Bilddaten, die vom mobilen Endgerät 10 aufgenommen werden, können insbesondere an eine zentrale Datencloud übertragen werden, mit der das Endgerät 10 kommunizieren kann. Alternativ oder zusätzlich kann das mobile Endgerät aus der besagten Datencloud auch Daten abrufen und/oder erhalten und/oder in Form von ausgewerteten Bilddaten bzw. daraus abgeleiteten Verschleißdaten zur Anzeige auf dem mobilen Endgerät. Insbesondere können sämtliche Daten, auch die Referenzbilder und/oder Maschinenidentifikationsdaten und/oder Aufnahmeführungs-Anweisungen, Verschleißkurven oder einzelne Verschleißzustandsdaten in der besagten Cloud abgelegt werden.

Hat der Endnutzer unter Berücksichtigung der Aufnahmeführung das Ist-Bild mit der Kamera 13 am mobilen Endgerät 10 gemacht, übermittelt das mobile Endgerät 10 die Bilddaten des Ist-Bilds an eine Auswerteeinheit 15, die das Ist-Bild auswertet. Die genannte Auswerteeinheit 15 kann am mobilen Endgerät 10 selbst vorgesehen sein, beispielsweise in Form eines dort implementierten Software-Bausteins. Alternativ oder zusätzlich kann die Auswerteeinheit 15 aber auch an der separaten Rechnereinheit 16 vorgesehen sein, beispielsweise in Form eines dort implementierten Software-Bausteins, um das Ist-Bild des Bauteils 1 hinsichtlich seines Verschleißes auszuwerten.

Insbesondere kann die genannte Auswerteeinheit 15 eine Bildauswerteeinrichtung 14 umfassen, die das Ist-Bild mit einem oder mehreren Referenzbildern des Bauteils 1 vergleicht, die charakteristische Zustände des Bauteils 1 wiedergeben. Insbesondere kann das Ist-Bild mit zumindest einem Referenzbild verglichen werden, das den unverschlissenen Neuzustand des Bauteils 1 zeigt und/oder zumindest mit einem Referenzbild verglichen werden, das einen bestimmten Verschleißzustand, beispielsweise 50 % Verschleiß oder 75 % Verschleiß des Bauteils 1 zeigt.

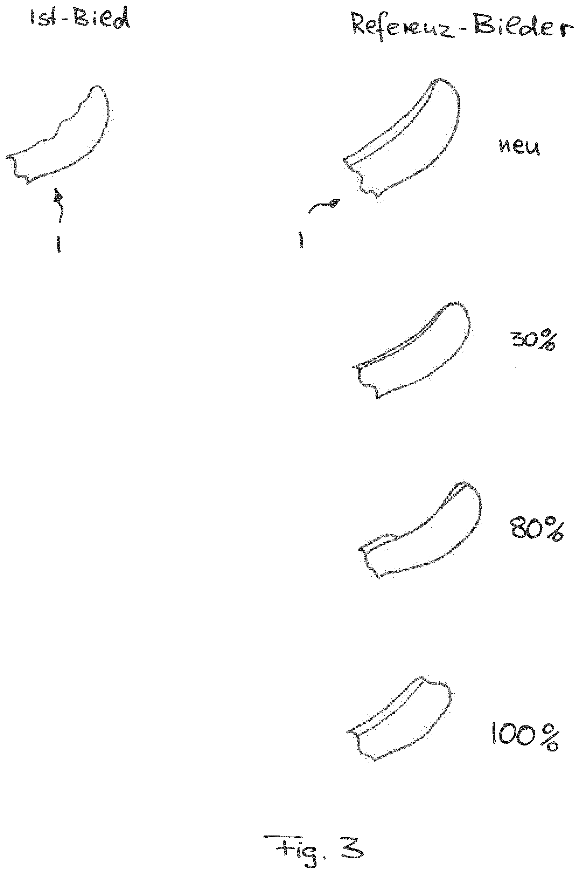

Fig. 3 zeigt solche Referenzbilder des Bauteils 1 - in Form des schon genannten Schneidmessers - wobei diese Referenzbilder in einem Referenzbildspeicher 17 gespeichert sein können, der Teil der Rechnereinheit 16 sein oder auf den die Rechnereinheit 16 Zugriff haben kann. Gegebenenfalls können solche Referenzbilder aber auch in dem mobilen Endgerät 10 selbst gespeichert werden.

Wie Fig. 3 zeigt, kann es sinnvoll sein, als Referenzbilder mehrere Verschleißstufen zu haben, die im Verschleißgrad stufenweise zwischen dem Neuzustand und dem Verschleißzustand, in dem die zulässige Verschleißgrenze erreicht ist, liegen können.

Die genannte Bildauswerteeinrichtung 14 vergleicht das Ist-Bild des Bauteils 1 anhand verschiedener Kriterien mit den gespeicherten Referenzbildern, um zu bestimmen, welchem der Referenzbilder das Ist-Bild am nächsten kommt, bzw. zwischen welchen Referenzbildern und damit zwischen welchen Verschleißgraden das Ist-Bild liegt.

Die Bildauswerteeinrichtung 14 kann verschiedene Auswertekriterien berücksichtigen und beispielsweise Konturauswertemittel 14a umfassen, die Konturveränderungen des Bauteils 1 bestimmen können, um anhand solcher Konturveränderungen den Verschleißzustand bestimmen zu können. Insbesondere können solche Konturauswertemittel 14a Umrissverkleinerungen und/oder Bauteilverdünnungen bestimmen, um anhand der eingetretenen Umrissverkleinerung und/oder der eingetretenen Bauteilverdünnung den Verschleißgrad zu bestimmen.

Alternativ oder zusätzlich können die Konturauswertemittel 14a auch Unregelmä-ßigkeiten und/oder Wellungen und/oder Vertiefungen, wie Schrammen oder Erhöhungen, wie Blasen an der Bauteiloberfläche bestimmen, um anhand solcher Oberflächen- und/oder Umrisskonturwellungen den Verschleiß zu bestimmen. Beispielsweise bei den gezeigten Schneidmessern führen aufschlagende Steine regelmäßig zu Eindellungen an der Schneide, so dass die Schneide nicht mehr die ursprüngliche, oft strakende, harmonische Kontur besitzt, sondern darin charakteristische Eindellungen besitzt, welche als Verschleiß identifiziert werden können.

Ferner kann die Bildauswerteeinrichtung 14 Farbmuster- und/oder Graustufenmuster-Auswertemittel 14b umfassen, die anhand des Bildvergleichs Veränderungen des Farbmusters und/oder des Graustufenmusters, welches das Bauteil 1 im aufgenommenen Bild zeigt, bestimmen und daraus den Verschleißgrad ermitteln können.

Ferner kann die Bildauswerteeinrichtung 14 auch Flächenanteils-Auswertemittel 14c umfassen, die in einem umfassten Bild des Bauteils 1 den Flächenanteil einer jeweiligen Farbe und/oder einer jeweiligen Graustufe und/oder eines jeweiligen Pixelmusters bestimmen können, welchen Flächenanteil die genannte Farbe und/oder Graustufe und/oder Pixelagglomeration in der Gesamtfläche des Bauteils 1 einnimmt. Hat beispielsweise das Messer als Schneide einen Wellenschliff, der als zebraähnliches Hell-Dunkelmuster an einer Kante des Messers bzw. des Bildes hiervon erscheint, kann die Flächenanteils-Auswertung bestimmen, welchen Flächenanteil das genannte Zebramuster und damit der Wellenschliff an der Gesamtfläche des Messers besitzt, woraus wiederum auf den Verschleißgrad geschlossen werden kann. Nutzt sich die Schneide zunehmend ab, wird der Wellenschliffanteil und damit das Zebramuster in seinem Anteil an der Gesamtfläche des Messers kleiner.

Die genannten Farbflächenanteil- und/oder Graustufenflächenanteil-Auswertemittel 14c können auch das Auftreten einer neuen Farbe und deren Flächenanteil bestimmen. Tritt beispielsweise an einem Bauteil mit dunkler Oberflächenbeschichtung der metallisch-silbrige Kern mit einem immer größeren Flächenanteil zu Tage, weil die dunkle Oberflächenbeschichtung zunehmend verschleißt, kann der Flächenanteil des metallisch-silbrigen Kerns im Verhältnis zur dunklen Oberflächenbeschichtung ein Maß für die Abnutzung und den Verschleiß bilden.

Die Bildauswerteeinrichtung 14 kann auch Verformungs-Auswertemittel 14d umfassen, um anhand des Vergleichs des Ist-Bilds mit den Referenzbildern eine Verformung des Bauteils 1 zu bestimmen. Zeigt beispielsweise ein Ist-Bild des Schneidmessers, welches frontal von vorne auf die Schneide aufgenommen wurde, keine schmale, ebene Schneidplatte, sondern ein mehr oder minder stark bogenförmig gekrümmtes Blech, kann aus dem Vergleich mit den Referenzbildern, die eine unverformte, ebene Schneidplatte zeigen, eine Verformung des Messers bestimmt und daraus der Verschleißgrad ermittelt werden.

Vorteilhafterweise kann die Auswerteeinheit 15 zusätzlich zu der genannten Bildauswertung auch noch weitere Bauteilinformationen für die Bestimmung des Verschleißzustandes heranziehen und zwar insbesondere die zuvor genannten Betriebsdaten des Bauteils, wie beispielsweise die Flächenleistung, die Fuhrenzahl, die Betriebsstunden oder die Fuhrenzahl, die von der Datenverarbeitungsvorrichtung 4 der Maschine 2 erfasst und gespeichert und von der Kommunikationseinrichtung, beispielsweise in Form des genannten Beacons auf das mobile Endgerät 10 übertragen worden sind.

In der eingangs schon erläuterten Weise können diese Betriebsdaten zusätzlich zu dem Verschleißgrad, der aus der Bildauswertung bestimmt wurde, berücksichtigt und gegebenenfalls gewichtet werden, um den endgültigen Verschleißgrad zu bestimmen.

## Patentansprüche

1. Vorrichtung zum Erkennen des Verschleißzustands eines Verschleißteils einer landwirtschaftlichen Maschine,
wobei die Vorrichtung ein mobiles Endgerät (10) und eine Datenverarbeitungsvorrichtung (4) der landwirtschaftlichen Maschine umfasst,
wobei das mobile Endgerät (10) eine optische Erfassungseinrichtung (12), insbesondere eine Kamera (13), zum Erfassen des Ist-Bilds des Bauteils (1),
eine Datenkommunikationseinrichtung (11), und
eine Auswerteeinheit (15) mit einer Bildauswerteeinheit (14) sowie einem Referenzbildspeicher (17), in dem zumindest eine Referenzdarstellung des Bauteils (1) gespeichert ist, umfasst,
wobei die Bildeauswerteeinrichtung (14) dazu ausgebildet ist, das Ist-Bild des Bauteils (1) mit dem zumindest einen Referenzbild des Bauteils (1) zu vergleichen und durch den optischen Vergleich den Schädigungs- und/oder Verschleißgrad des Bauteils (1) zu bestimmen,
wobei von der Datenverarbeitungsvorrichtung (4) der landwirtschaftlichen Maschine (2), an dem das Bauteil (1) verwendet wird, Betriebsdaten an das mobile Endgerät übertragbar sind, wobei
die Auswerteeinheit (15) Auswertemittel zum Auswerten der von dem mobilen Endgerät (10) an die Auswerteeinheit (15) übertragen Betriebsdaten umfasst, und
die genannten Auswertemittel eine Schätzeinrichtung zum Abschätzen des Verschleißzustands des Bauteils (1) anhand der übermittelten Betriebsdaten umfassen, und
wobei die Auswerteeinheit (15) dazu ausgebildet ist, anhand des auf Basis der übermittelten Betriebsdaten geschätzten Verschleißzustands und des von der Bildauswerteeinrichtung (14) anhand des Bildvergleichs ermittelten Verschleißzustands einen endgültigen Verschleißzustand zu bestimmen.

2. Vorrichtung nach dem vorhergehenden Anspruch, wobei der Referenzbildspeicher (17) einen Referenzschädigungsspeicher aufweist, in dem Referenzdarstellungen des Bauteils (1) mit verschiedenen Schädigungsgraden des Bauteils (1) enthalten sind, anhand derer durch einen optischen Vergleich des Ist-Bilds des Bauteils mit den gespeicherten Referenzdarstellungen der Schädigungs- und/oder Verschleißgrad des Bauteils bestimmbar ist.

3. Vorrichtung nach einem der vorhergehenden Ansprüche, wobei eine automatische oder halbautomatische Bildauswerteeinrichtung (14) zum optischen Vergleichen des Ist-Bilds des Bauteils (1) mit den gespeicherten Referenzdarstellungen und zum Einkategorisieren von im Ist-Bild zu sehenden Schädigungen vorgesehen ist.

4. Vorrichtung nach einem der vorhergehenden Ansprüche, wobei eine Auswerteeinrichtung (14) zum Aufsummieren von einzelnen Schädigungen zu einem Gesamtschädigungsgrad und Abgeben eines Austauschreifesignals bei Erreichen eines vorbestimmten Gesamtschädigungsgrades vorgesehen ist.

5. Vorrichtung nach einem der vorhergehenden Ansprüche, wobei die optische Erfassungseinrichtung (12) dazu ausgebildet ist, farbige Ist-Bilder des Bauteils (1) zu erfassen, wobei die Bildauswerteeinrichtung (14) dazu vorgesehen ist, Schädigungen des Bauteils anhand unterschiedlicher Farben, in denen Abschnitte und/oder Materialschichten des Bauteils (1) eingefärbt sind, zu erfassen und einzukategorisieren.

6. Vorrichtung nach einem der vorhergehenden Ansprüche, wobei die Bildauswerteeinrichtung (14) dazu ausgebildet ist, anhand verschiedener Werkstoffe, aus denen das Bauteil besteht, Schädigungen zu erfassen und einzukategorisieren.

7. Vorrichtung nach einem der vorhergehenden Ansprüche, wobei die Bildauswerteeinrichtung (14) Konturauswertemittel (14a) zum Bestimmen von Konturveränderungen des Bauteils (1), und Bestimmen des Verschleißzustands anhand solcher Konturveränderungen aufweist, wobei die Konturauswertemittel (14a) dazu ausgebildet sind,
Umrißverkleinerungen und/oder Bauteilverdünnungen zu bestimmen, und den Verschleißzustand anhand solcher Umrißverkleinerungen und/oder Bauteilverdünnungen zu bestimmen, und/oder
Oberflächen- und/oder Umrißkonturwellungen des Bauteils (1) zu bestimmen, und den Verschleißzustand anhand der Oberflächen- und/oder Umrißkonturwellungen zu bestimmen.

8. Vorrichtung nach einem der vorhergehenden Ansprüche, wobei die Bildauswerteeinrichtung (14)
Farb- und/oder Graustufenmuster-Auswertemittel (14b) zum Bestimmen von Veränderungen des Farb- und/oder Graustufenmusters des Bauteils (1) und Bestimmen der Ablegereife anhand eines festgestellten, veränderten Farb- und/oder Graustufenmusters, und/oder
Farb- und/oder Graustufenflächenanteil-Auswertemittel (14c) zum Bestimmen des Flächenanteils einer Farbe und/oder Graustufe im Bild des Bauteils (1) und Bestimmen der Ablegereife anhand des festgestellten Farb- und/oder Graustufenflächenanteils aufweist.

9. Vorrichtung nach einem der vorhergehenden Ansprüche, wobei die Bildauswerteeinrichtung (14) Verformungs-Auswertemittel (14d) zum optischen Bestimmen der Beabstandung und Relativposition bestimmter Farbmuster- und/oder Pixelgruppenstellen im Bild des Bauteils (1) und Bestimmen einer Bauteilverformung anhand der festgestellten Beabstandung und Relativposition sowie schließlich Bestimmen des Verschleißzustands anhand der festgestellten Bauteilverformung aufweist.

10. Vorrichtung nach einem der vorhergehenden Ansprüche, wobei eine Aufnahmeführungs-Einrichtung (5) zum Ausgeben von Anweisungen zur Perspektive, aus der das Ist-Bild des Bauteils (1) aufzunehmen ist, an dem mobilen Endgerät (10) vorgesehen ist.

11. Vorrichtung nach dem vorhergehenden Anspruch, wobei die Aufnahmeführungs-Einrichtung (5) dazu ausgebildet ist, bauteilspezifische Aufnahmeanweisungen, die von Bauteil zu Bauteil variieren, auszugeben und in Abhängigkeit einer Bauteil-Identifikation arbeitet.

12. Vorrichtung nach einem der vorhergehenden Ansprüche, wobei eine Identifikations-Einrichtung (6) zum Identifizieren des Bauteils (1) an dem mobilen Endgerät (10) vorgesehen ist, wobei die Identifikations-Einrichtung (6) einen CodeLeser zum Einlesen eines Bauteilcodes, insbesondere eines Strichcodes und/oder eines HR-Codes und/oder eines Zahlencodes, aufweist, anhand dessen das Bauteil identifizierbar ist.

13. Vorrichtung nach einem der vorhergehenden Ansprüche, wobei die Auswerteeinheit (15) einen Verschleißkurven-Bestimmungsbaustein zum Bestimmen einer Verschleißkurve aus mehreren, zeitlich nacheinander von der Bildauswerteeinrichtung (14) bestimmten Schädigungs- und/oder Verschleißgraden des Bauteils (1) und Berechnen der verbleibenden Restlebensdauer aus der Verschleißkurve aufweist.

14. Vorrichtung nach einem der vorhergehenden Ansprüche, wobei eine Cloud zum Speichern der zumindest einen Referenzdarstellung und/oder des zumindest einen erfassten Ist-Bilds des Bauteils und/oder weiterer Daten für die Verschleißbestimmung vorgesehen ist.

15. Vorrichtung nach einem der vorhergehenden Ansprüche, wobei die Betriebsdaten erbrachte Flächenleistung, Betriebsstunden, Fuhrenanzahl und/oder Ballenanzahl sind.

16. Verfahren zum Bestimmen des Verschleißzustands eines Verschleißteils einer landwirtschaftlichen Maschine (1), wobei mit der optischen Erfassungseinrichtung (12) eines mobilen Endgeräts (10) ein Ist-Bild des Bauteils (1) erfasst wird, wobei in einem Referenzbildspeicher (17) zumindest ein Referenzbild des Bauteils (1) bereitgehalten wird, wobei von einer Auswerteeinheit (15) mit einer Bildauswerteeinrichtung (14) das erfasste Ist-Bild des Bauteils (1) mit dem gespeicherten Referenzbild verglichen und aus dem Bildvergleich der Schädigungs- und/oder Verschleißzustand des Bauteils (1) automatisch ermittelt wird, wobei von einer Datenverarbeitungsvorrichtung (4) der landwirtschaftlichen Maschine (2), an der das Bauteil (1) verwendet wird, Betriebsdaten an das mobile Endgerät (10) übertragen werden, wobei die genannte Auswerteeinheit (15) mit Auswertemitteln, die von dem mobilen Endgerät (10) an die Auswerteeinheit (15) übertragenen Betriebsdaten auswertet und mittels einer Schätzeinrichtung der Auswertemittel den Verschleißzustand des Bauteils anhand der übermittelten Betriebsdaten abschätzt, und wobei von der genannten Auswerteeinheit (15) anhand des auf Basis der übermittelten Betriebsdaten geschätzten Verschleißzustands und des von der Bildauswerteeinrichtung (14) anhand des Bildvergleichs ermittelten Verschleißzustands ein endgültiger Verschleißzustand bestimmt wird.

## Claims

1. Device for detecting the state of wear of a wearing part of an agricultural machine,
wherein the device comprises a mobile terminal (10) and a data processing device (4) of the agricultural machine,
wherein the mobile terminal (10) comprises an optical recording device (12), in particular a camera (13), for recording the actual image of the component (1),
a data communication device (11), and
an evaluation unit (15) having an image evaluation unit (14) and a reference image memory (17) in which at least one reference representation of the component (1) is stored,
wherein the image evaluation device (14) is designed to compare the actual image of the component (1) with the at least one reference image of the component (1) and to determine, using the optical comparison, the degree of damage and/or wear of the component (1),
wherein operating data can be transmitted to the mobile terminal from the data processing device (4) of the agricultural machine (2) on which the component (1) is used, wherein
the evaluation unit (15) comprises evaluation means for evaluating the operating data transmitted from the mobile terminal (10) to the evaluation unit (15), and
said evaluation means comprise an estimation device for estimating the state of wear of the component (1) using the transmitted operating data, and
wherein the evaluation unit (15) is designed to determine a final state of wear based on the state of wear estimated on the basis of the transmitted operating data and the state of wear determined by the image evaluation device (14) based on the image comparison.

2. Device according to the preceding claim, wherein the reference image memory (17) has a reference damage memory, in which reference representations of the component (1) with different degrees of damage of the component (1) are included, based on which the degree of damage and/or wear of the component can be determined by an optical comparison of the actual image of the component with the stored reference representations.

3. Device according to any one of the preceding claims, wherein an automatic or semi-automatic image evaluation device (14) is provided for optical comparison of the actual image of the component (1) with the stored reference representations and for categorising damage seen in the actual image.

4. Device according to any one of the preceding claims, wherein an evaluation device (14) is provided for summing up individual damages to a total degree of damage and emitting a replacement maturity signal when a predetermined total degree of damage is reached.

5. Device according to any one of the preceding claims, wherein the optical recording unit (12) is designed to record coloured actual images of the component (1), wherein the image evaluation device (14) is provided to record and categorise damage to the component based on different colours in which sections and/or material layers of the component (1) are coloured.

6. Device according to any one of the preceding claims, wherein the image evaluation device (14) is designed to record and categorise damage based on different materials of which the component is made.

7. Device according to any one of the preceding claims, wherein the image evaluation device (14) comprises contour evaluation means (14a) for determining contour changes of the component (1), and determining the state of wear based on such contour changes, wherein the contour evaluation means (14a) are designed to
determine outline reductions and/or component thinnings, and to determine the state of wear based on such outline reductions and/or component thinnings, and/or
determine surface and/or outline contour undulations of the component (1), and to determine the state of wear based on the surface and/or outline contour undulations.

8. Device according to any one of the preceding claims, wherein the image evaluation device (14) comprises
colour and/or grey scale pattern evaluation means (14b) for determining changes in the colour and/or grey scale pattern of the component (1) and determining the discard maturity based on a detected changed colour and/or grey scale pattern, and/or
colour and/or grey scale area percentage evaluation means (14c) for determining the percentage area of a colour and/or grey scale in the image of the component (1) and determining the discard maturity based on the determined colour and/or grey scale area fraction.

9. Device according to any one of the preceding claims, wherein the image evaluation device (14) has deformation evaluation means (14d) for optically determining the spacing and relative position of specific colour pattern and/or pixel group locations in the image of the component (1) and determining a component deformation based on the determined spacing and relative position and finally determining the state of wear based on the determined component deformation.

10. Device according to any one of the preceding claims, wherein a capturing guide device (5) for outputting instructions on the perspective from which the actual image of the component (1) is to be captured is provided on the mobile terminal (10).

11. Device according to the preceding claim, wherein the capturing guide device (5) is designed to output component-specific capturing instructions that vary from component to component and operates depending on a component identification.

12. Device according to any one of the preceding claims, wherein an identification device (6) is provided for identifying the component (1) on the mobile terminal (10), wherein the identification device (6) has a code reader for reading a component code, in particular a barcode and/or an HR code and/or a numerical code, by means of which the component can be identified.

13. Device according to any one of the preceding claims, wherein the evaluation unit (15) has a wear curve determination module for determining a wear curve from a plurality of degrees of damage and/or wear of the component (1) determined successively in time by the image evaluation device (14) and calculating the remaining service life from the wear curve.

14. Device according to any one of the preceding claims, wherein a cloud is provided for storing the at least one reference representation and/or the at least one recorded actual image of the component and/or other data for the wear determination.

15. Device according to any one of the preceding claims, wherein the operating data is area output, hours of operation, number of loads and/or number of bales.

16. Method for determining the state of wear of a wearing part of an agricultural machine (1), wherein an actual image of the component (1) is recorded with the optical recording device (12) of a mobile terminal (10), wherein at least one reference image of the component (1) is provided in a reference image memory (17), wherein an evaluation unit (15) having an image evaluation device (14) compares the recorded actual image of the component (1) with the stored reference image and the state of damage and/or wear of the component (1) is automatically determined from the image comparison, wherein operating data is transmitted to the mobile terminal (10) from a data processing device (4) of the agricultural machine (2) on which the component (1) is used, wherein said evaluation unit (15) having evaluation means evaluates the operating data transmitted from the mobile terminal (10) to the evaluation unit (15) and estimates the state of wear of the component by means of an estimation device of the evaluation means based on the transmitted operating data, and wherein a final state of wear is determined by said evaluation unit (15) based on the state of wear estimated on the basis of the transmitted operating data and the state of wear determined by the image evaluation device (14) based on the image comparison.

## Revendications

1. Dispositif de détection de l'état d'usure d'une pièce d'usure d'une machine agricole,
dans lequel le dispositif comprend un terminal mobile (10) et un dispositif de traitement de données (4) de la machine agricole,
dans lequel le terminal mobile (10) comprend un système d'acquisition optique (12), en particulier une caméra (13), pour acquérir l'image réelle du composant (1), un système de communication de données (11) et
une unité d'évaluation (15) dotée d'une unité d'évaluation d'image (14) ainsi que d'une mémoire d'images de référence (17), dans laquelle au moins une représentation de référence du composant (1) est enregistrée,
dans lequel le système d'évaluation d'image (14) est conçu pour comparer l'image réelle du composant (1) avec l'au moins une image de référence du composant (1) et pour déterminer le degré d'endommagement et/ou d'usure du composant (1) au moyen de la comparaison optique,
dans lequel des données de fonctionnement peuvent être transmises au terminal mobile par le dispositif de traitement de données (4) de la machine agricole (2) sur laquelle le composant (1) est utilisé, dans lequel
l'unité d'évaluation (15) comprend des moyens d'évaluation pour évaluer les données de fonctionnement transmises à l'unité d'évaluation (15) par le terminal mobile (10) et
lesdits moyens d'évaluation comprennent un système d'estimation pour estimer l'état d'usure du composant (1) à l'aide des données de fonctionnement communiquées, et
dans lequel l'unité d'évaluation (15) est conçue pour déterminer un état d'usure définitif à l'aide de l'état d'usure estimé sur la base des données de fonctionnement communiquées et de l'état d'usure déterminé par le système d'évaluation d'image (14) à l'aide de la comparaison d'image.

2. Dispositif selon la revendication précédente, dans lequel la mémoire d'images de référence (17) présente une mémoire d'endommagement de référence, dans laquelle se trouvent des représentations de référence du composant (1) avec différents degrés d'endommagement du composant (1), à l'aide desquelles le degré d'endommagement et/ou d'usure du composant peut être déterminé par une comparaison optique de l'image réelle du composant avec les représentations de référence enregistrées.

3. Dispositif selon l'une des revendications précédentes, dans lequel est prévu un système d'évaluation d'image (14) automatique ou semi-automatique pour la comparaison optique de l'image réelle du composant (1) avec les représentations de référence enregistrées et pour la catégorisation d'endommagements visibles dans l'image réelle.

4. Dispositif selon l'une des revendications précédentes, dans lequel est prévu un système d'évaluation (14) pour additionner des endommagements individuels afin d'obtenir un degré d'endommagement total et pour émettre un signal d'état bon pour remplacement lorsqu'un degré d'endommagement total prédéfini est atteint.

5. Dispositif selon l'une des revendications précédentes, dans lequel le système d'acquisition optique (12) est conçu pour acquérir des images réelles en couleurs du composant (1), le système d'évaluation d'image (14) étant prévu pour détecter et catégoriser des endommagements du composant à l'aide de différentes couleurs dans lesquelles des parties et/ou couches de matériau du composant (1) sont colorées.

6. Dispositif selon l'une des revendications précédentes, dans lequel le système d'évaluation d'image (14) est conçu pour détecter et catégoriser des endommagements à l'aide de différents matériaux dont se compose le composant.

7. Dispositif selon l'une des revendications précédentes, dans lequel le système d'évaluation d'image (14) présente des moyens d'évaluation de contour (14a) pour déterminer des modifications de contour du composant (1) et pour déterminer l'état d'usure à l'aide de modifications de contour de ce type, les moyens d'évaluation de contour (14a) étant conçus pour
déterminer des rétrécissements du périmètre et/ou des amincissements du composant et pour déterminer l'état d'usure à l'aide de rétrécissements du périmètre et/ou d'amincissements du composant de ce type, et/ou
déterminer des ondulations de surface et/ou de contour de périmètre du composant (1) et pour déterminer l'état d'usure à l'aide des ondulations de surface et/ou de contour de périmètre.

8. Dispositif selon l'une des revendications précédentes, dans lequel le système d'évaluation d'image (14) présente
des moyens d'évaluation de modèle de couleurs et/ou de niveaux de gris (14b) pour déterminer des modifications du modèle de couleurs et/ou de niveaux de gris du composant (1) et pour déterminer l'état d'usure nécessitant le remplacement à l'aide d'un modèle de couleurs et/ou de niveaux de gris modifié constaté, et/ou
des moyens d'évaluation de proportion de surface de couleur et/ou de niveau de gris (14c) pour déterminer la proportion de surface d'une couleur et/ou d'un niveau de gris dans l'image du composant (1) et pour déterminer l'état d'usure nécessitant le remplacement à l'aide de la proportion de surface de couleur et/ou de niveau de gris constatée.

9. Dispositif selon l'une des revendications précédentes, dans lequel le système d'évaluation d'image (14) présente des moyens d'évaluation de déformation (14d) pour déterminer de manière optique l'espacement et la position relative entre des zones de modèle de couleurs et/ou de groupes de pixels définies dans l'image du composant (1) et pour déterminer une déformation de composant à l'aide de l'espacement et de la position relative constatés et enfin pour déterminer l'état d'usure à l'aide de la déformation de composant constatée.

10. Dispositif selon l'une des revendications précédentes, dans lequel un système de guidage de prise de vue (5) est prévu sur le terminal mobile (10) pour émettre des instructions relatives à la perspective sous laquelle la prise de vue de l'image réelle du composant (1) est à effectuer.

11. Dispositif selon la revendication précédente, dans lequel le système de guidage de prise de vue (5) est conçu pour émettre des instructions de prise de vue spécifiques au composant, qui varient d'un composant à l'autre, et fonctionne en fonction d'une identification de composant.

12. Dispositif selon l'une des revendications précédentes, dans lequel un système d'identification (6) pour identifier le composant (1) est prévu sur le terminal mobile (10), le système d'identification (6) présentant un lecteur de code pour lire un code de composant, en particulier un code à barres et/ou un code HR et/ou un code chiffré, à l'aide duquel le composant peut être identifié.

13. Dispositif selon l'une des revendications précédentes, dans lequel l'unité d'évaluation (15) présente un module de détermination de courbe d'usure pour déterminer une courbe d'usure à partir de plusieurs degrés d'endommagement et/ou d'usure du composant (1) déterminés successivement dans le temps par le système d'évaluation d'image (14) et pour calculer la durée de vie résiduelle restante à partir de la courbe d'usure.

14. Dispositif selon l'une des revendications précédentes, dans lequel est prévu un cloud pour enregistrer l'au moins une représentation de référence et/ou l'au moins une image réelle acquise du composant et/ou d'autres données pour la détermination de l'usure.

15. Dispositif selon l'une des revendications précédentes, dans lequel les données de fonctionnement sont le rendement par surface réalisé, les heures de fonctionnement, le nombre de chargements et/ou le nombre de balles.

16. Procédé de détermination de l'état d'usure d'une pièce d'usure d'une machine agricole (1), dans lequel une image réelle du composant (1) est acquise au moyen du système d'acquisition optique (12) d'un terminal mobile (10), au moins une image de référence du composant (1) étant disponible dans une mémoire d'images de référence (17), l'image réelle acquise du composant (1) étant comparée avec l'image de référence enregistrée par une unité d'évaluation (15) dotée d'un système d'évaluation d'image (14) et l'état d'endommagement et/ou d'usure du composant (1) étant déterminé automatiquement à partir de la comparaison d'image, des données de fonctionnement étant transmises au terminal mobile (10) par un dispositif de traitement de données (4) de la machine agricole (2) sur laquelle le composant (1) est utilisé, ladite unité d'évaluation (15) évaluant les données de fonctionnement transmises à l'unité d'évaluation (15) par le terminal mobile (10) à l'aide de moyens d'évaluation et estimant, au moyen d'un système d'estimation des moyens d'évaluation, l'état d'usure du composant à l'aide des données de fonctionnement communiquées, et un état d'usure définitif étant déterminé par ladite unité d'évaluation (15) à l'aide de l'état d'usure estimé sur la base des données de fonctionnement communiquées et de l'état d'usure déterminé par le système d'évaluation d'image (14) à l'aide de la comparaison d'image.
